# EUROPEAN PATENT APPLICATION

(11) **EP 4 194 369 A1**
(43) Date of publication of application: **14.06.2023**
(21) Application number: 21212997.7
(22) Date of filing: 08.12.2021
(51) Int. Cl.: B65G 1/137, B65G 1/04

(54) **STORAGE SYSTEM WITH LIFT**

(71) Applicant: Kim, Irina, London W6 9AT (GB)
(72) Inventor: CHERNYKH, Ilya, 5311 Paralimni (CY)
(74) Representative: Jeck, Jonathan

(57) **Abstract**

The present invention relates to a storage system comprising multiple storage levels with each multiple storage spaces for storage boxes multiple mobile transport units for transportation of storage boxes between storage spaces and a storage space and a processing point the processing point is located on one of the lower storage levels in each storage levels a transportation network of tracks is provided on which the mobile transport units are movable within each storage level the transportation networks of the individual storage levels are connected by a lift. The lift comprising a platform with several platform levels the platform levels have the same distance to one another as the levels of the storage space have the platform is adapted to move vertically between the storage levels the number of levels of the platform is at least corresponding to the numeral of the storage level where the processing is located and is at least two on the platform of the lift reaches in its lowest position the lowest storage level and at least the level on which the processing point is located the platform is adapted to reach with its top platform level all storage levels that are above platform in its lowest position the platform is adapted to carry at least two mobile transport units per platform level simultaneously.

## Description

An object of the present invention is the use of lifts in preferably a medium-height storage system with transport mobile units and a method for operating the system with them, methods for operating the lifts (100) themselves and arranging the traffic flows to them of transport mobile units with a minimum of interference to each other.

Another object of the present invention is the use of cascade lifts in preferably a high-rise storage system with transport mobile devices and a method for operating the system with them, methods for operating the cascade lifts themselves and arranging the traffic flows to them of transport mobile devices with a minimum of interference to each other.

This system is designed to ensure that trays are moved from the storage area to their processing points in the correct sequence and that the processed trays are returned to the storage area.

Figures 1 to 13 depict a first embodiment of the present invention. Figures 14-25 depict a second embodiment that may comprise the first embodiment. Aspects of the first and second embodiment are generally interchangeable.

### List of drawings.

Figure 1 shows a section of an object storage and handling system configured to accommodate a transport mobile device equipped with lifts. The view is isometric.
Figure 2 shows a section of an object storage and handling system configured to accommodate a transport mobile device equipped with lifts. Top view.
Figure 3 shows a single lift integrated into the system with its adjacent transport network and part of the storage area. The view is isometric.
Fig. 4 shows one lift integrated into the system with its adjacent transport network and part of the storage area. Top view.
Fig. 5 shows a variant of the lift design. The view is isometric.
Fig. 6 shows a transport mobile device. The view is isometric.
Fig. 7 shows a transport mobile with a box. The view is isometric.
Figs. 8, 9, 10 show step by step how the multi-level load platform (MLP) lift works.
Side view from the storage system side.
Figures 11, 12, 13 show a level-by-level variant of organising the movement of the mobile transport unit (MTU) in the lift operation area. Top view.

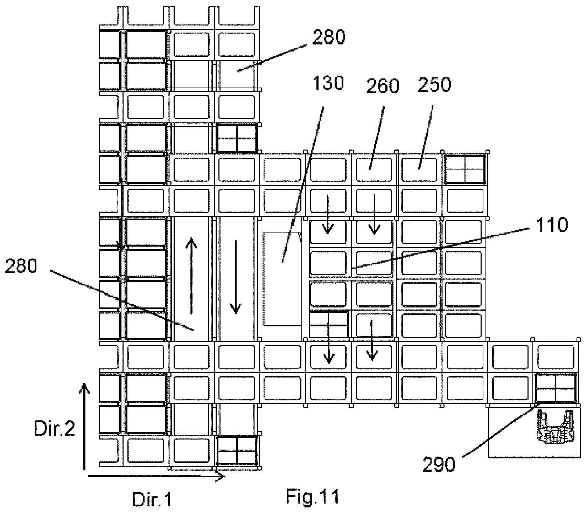

Figure 11 shows the levels 1 and 2.

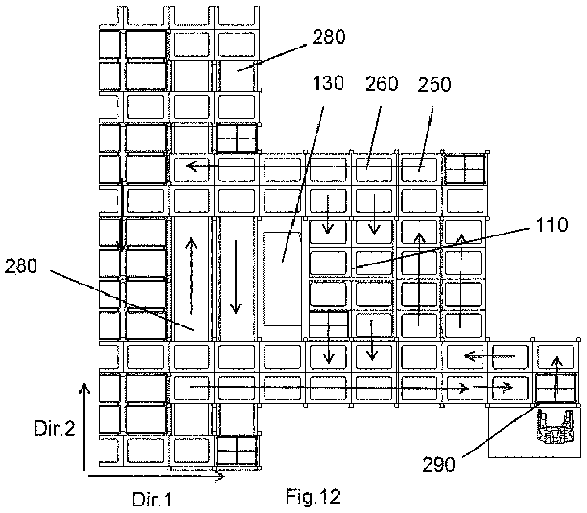

Figure 12 shows level 3.

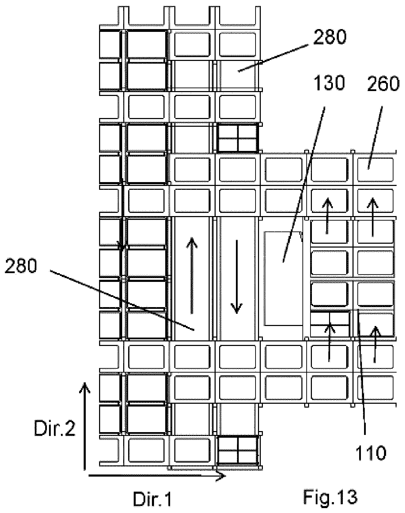

Figure 13 shows level 4 and above.

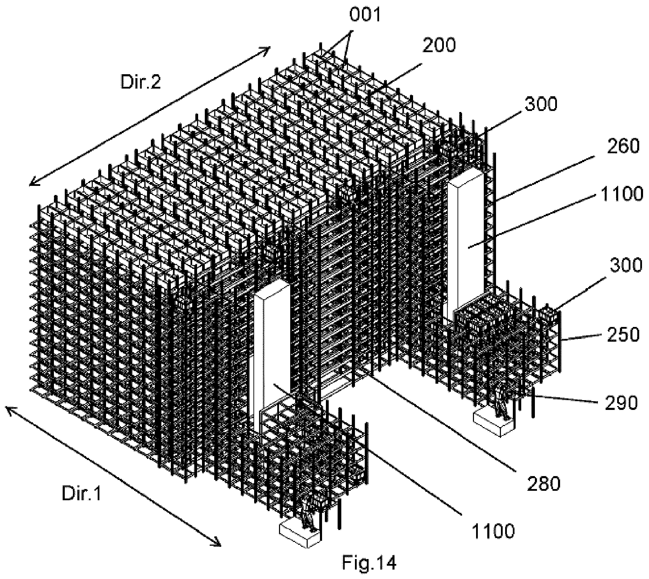

Figure 14 shows a section of an object storage and handling system configured to accommodate a transport mobile unit equipped with cascade lifts. The view is isometric.

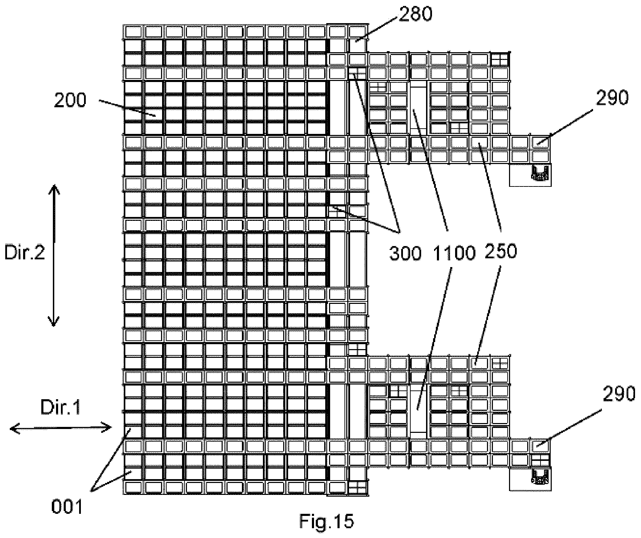

Figure 15 shows a section of an object storage and handling system equipped with cascading lifts. The cascade lifts are configured to accommodate a transport mobile device. Top view.

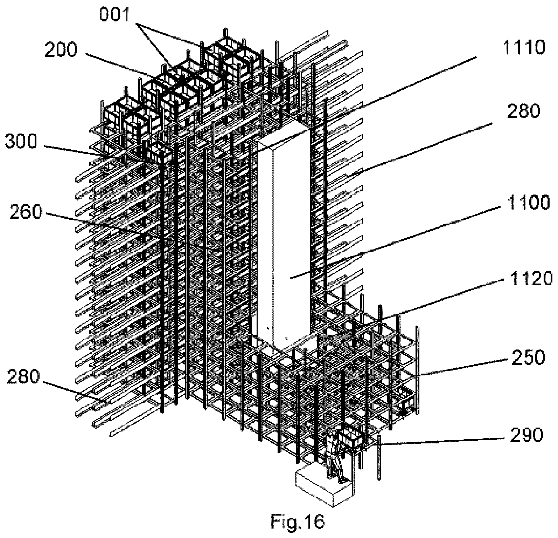

Figure 16 shows one cascade lift integrated into the system with an adjacent transport network and part of the storage area. The view is isometric.

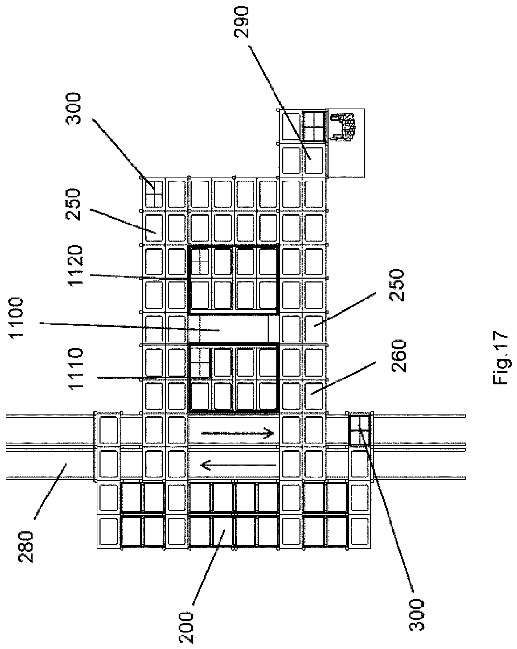

Fig. 17 shows one cascade lift integrated into the system with an adjacent transport network and part of the storage area. Top view.

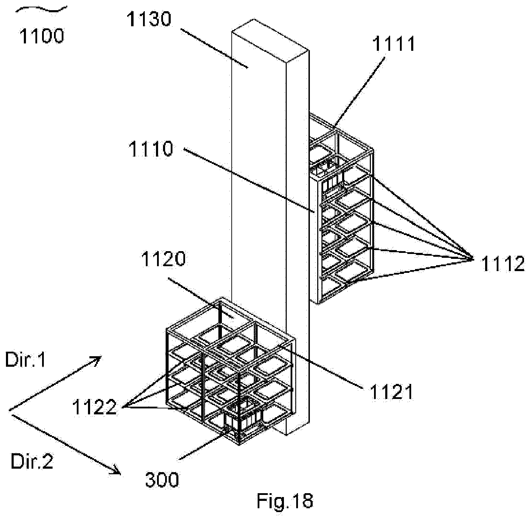

Fig. 18 shows a variant of the cascade lift design. The view is isometric.

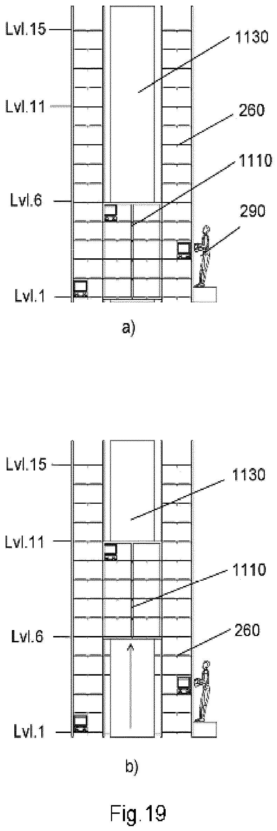

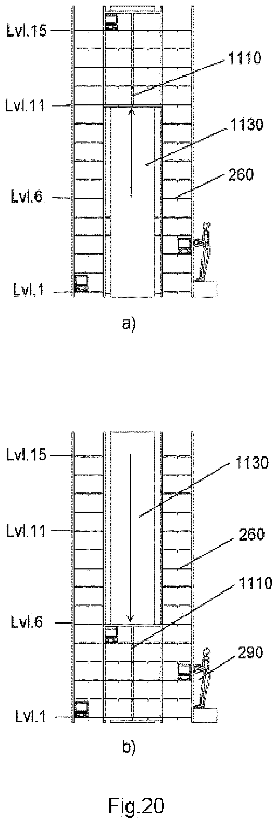

Fig. 19, 20 shows step by step how the main carriage of the cascade lift works. Side view from the storage system side.

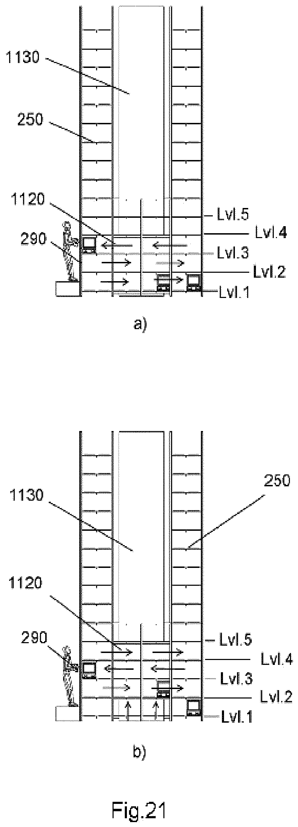

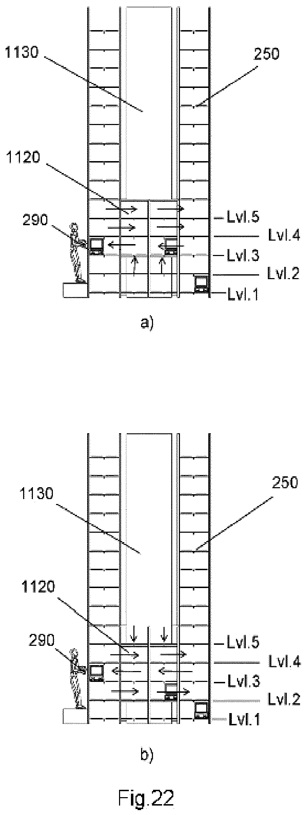

Fig. 21, 22 shows step by step how the additional cascade carriage works. Side view.

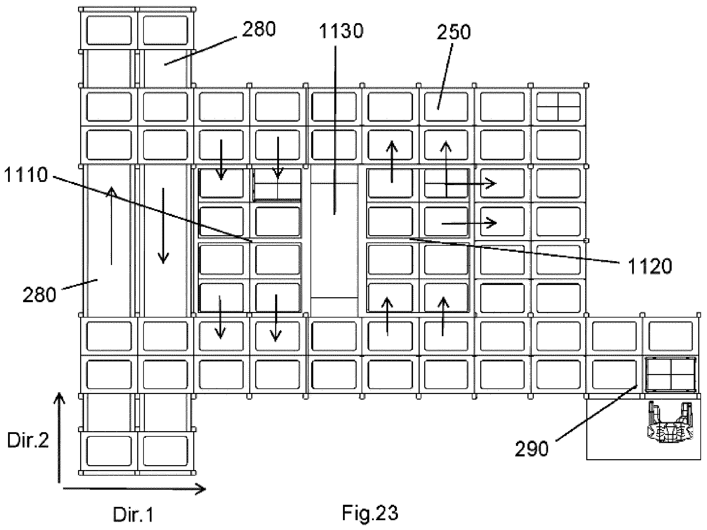

Figures 23, 24, 25 show a tier by tier view of the MTU traffic in the cascade lift operation area. Top view.
Figure 23 shows levels 1, 2, 4 and 5

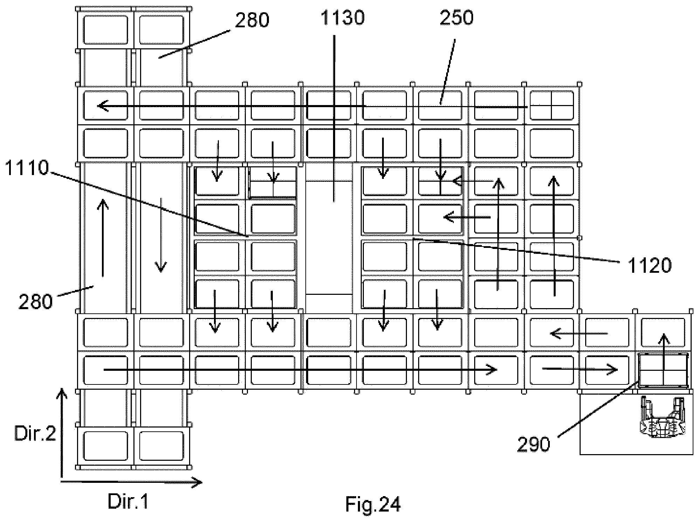

Figure 24 shows level 3.

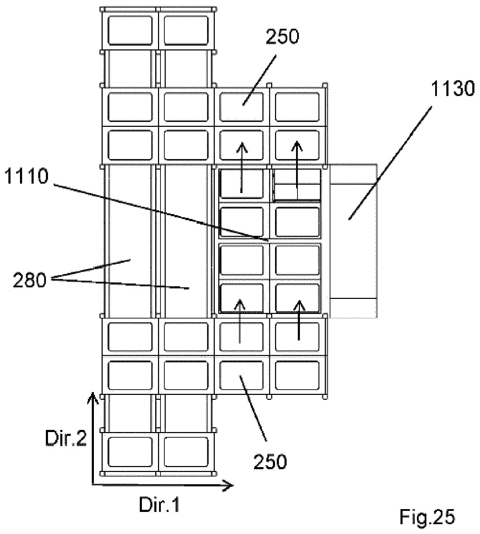

Figure 25 shows level 6 and above.

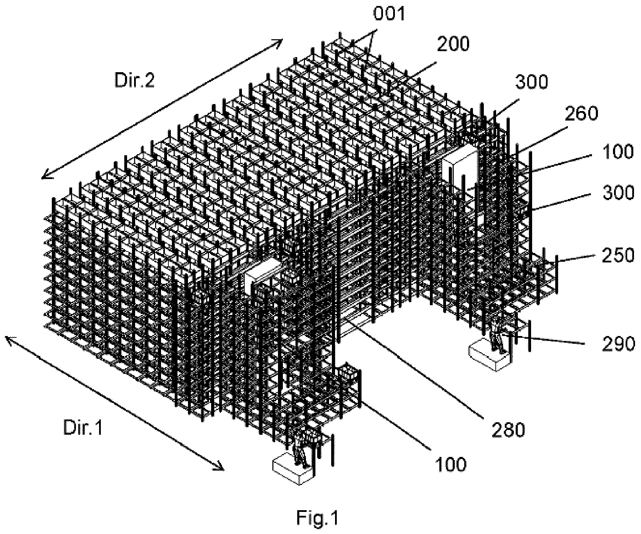

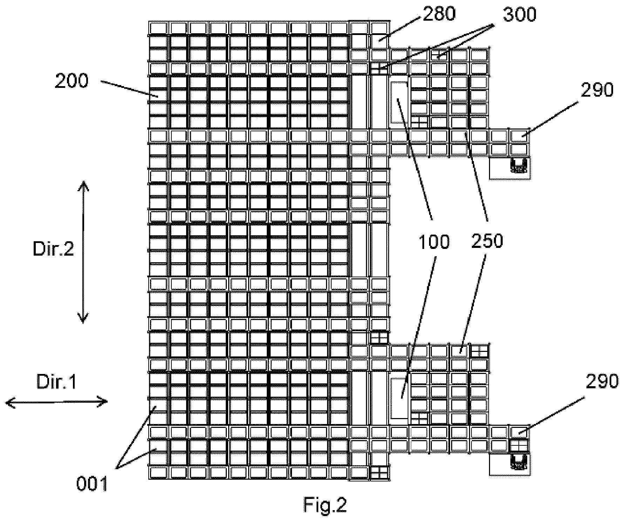

Figures 1 and 2 show a possible variant of a high-rise object storage and handling system with multiple lifts (100) configured to operate at least one transport mobile units (300) (MTU). As can be seen from the figures, the object storage and handling system includes
- a multi-level storage area (200) with an integrated transport network in which multiple trays (001) with objects are arranged at the storage locations in two horizontal mutually perpendicular directions 1 and 2,
- a plurality of transport mobile units (300) designed to independently pick up and move trays (001) containing objects in two mutually perpendicular horizontal directions 1 and 2 along the transport network both inside and outside the storage area (200),
- several lifts (100) designed to transport mobile units (300) between levels of storage area (200), connected to storage area (200) by transport networks (250) and (260) via two adaptor rows (280) designed to organize unidirectional movement each,
- several locations for processing objects (290).

The figure also shows several transport mobile units (300) located in different parts of the above system.

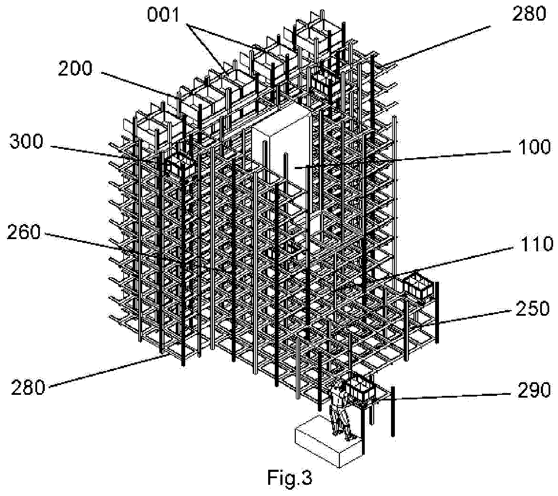

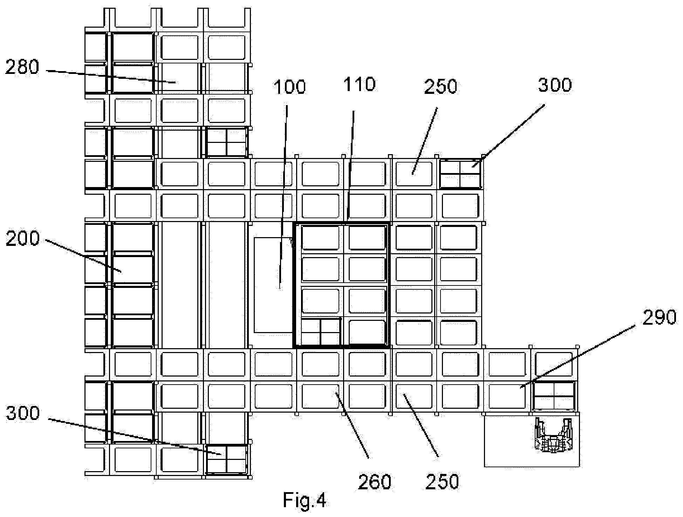

Figures 3 and 4 show an enlargement of a single lift operating area (100) with an adjacent part of the storage area (200). The drawings show that each lift (100) has a multi-level load platform (MLP)(110). As can be seen in figure 3 the MLP (110) of the lift (100) can be located as close as possible to the one-way adaptation lanes (280) and is connected to them at all levels by a transport network (260) spread over the entire height of the storage system. At the lower levels, preferably the lower three levels of the system there is a transport network (250) through which the MTUs (300) can bypass the MLP (110) lift, adjacent to the transport network (260) and the adapting lanes (280). As can be seen in Figure 4, the transport network (260) adjoins the MLP (110) in the second horizontal direction (above and below the MLP in the figure) and the transport network (250) adjoins the MLP (110) in the first (right of the MLP in the figure) horizontal direction, thus covering it, together with the network (260), in a half ring. Both transport networks (250) and (260) have two rows each, allowing two or more transport mobile units (300) to pass each other and not only each other. On the right side of the first horizontal direction to the transport network (260), there is an operator station (290) docked on the third level.

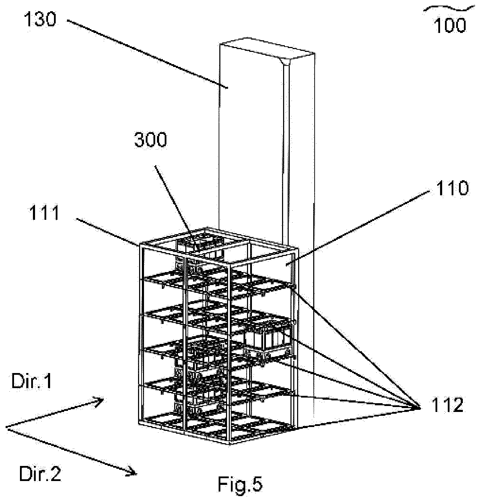

Fig. 5 depicts a variant design of the lift (100). As shown in the figure, the lift (100) may comprise a vertical post (130) serving as a device base and a vertical guide for movement of the MLP, and an MLP (110) moving vertically along the post (130). The MLP (110) of the lift is designed to move the MTU (300) between all levels of the storage system, and comprises an MLP body (111) and preferably five horizontal levels (112) attached thereto, made with vertical and horizontal steps coincident with the intervals of the transport network (260), enabling the MTU (300) to enter and exit all its horizontal levels (112) in a second horizontal direction. The area of each horizontal level (112) of the MLP (110) allows preferably up to eight or more transport mobile units (300) to be accommodated simultaneously on each level, either empty or with a tray on each of them. Dimensions of one horizontal level (112) in horizontal transport steps (n.1*n.2 = 2*4) The vertical working movement of the MLP (110) of the lift (100) allows it to move both one and many MTUs (300) at a time, between all storage levels of the system.

It is also clear from the presented invention that the lift variant (100) shown in the figure can also be made with more than one pillar and with a non-cantilevered MLP. It is also clear from the invention that the area of the horizontal MLP levels of the lift and their number can also be different.

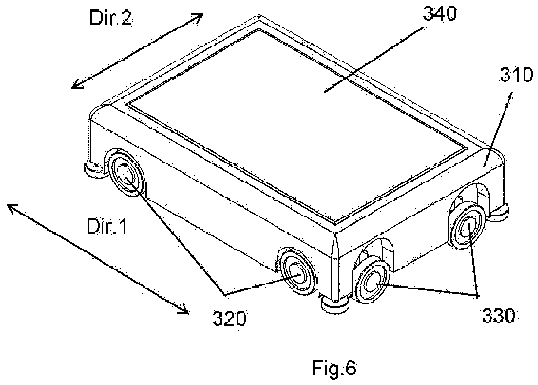

Fig. 6 depicts an empty transport mobile device (300) in a transport position for movement in the second horizontal direction. As can be seen from the figure, the transport mobile device (300) comprises a main body (310), two groups of wheels (320) and (330) serving to move the device in the first and second horizontal directions respectively, and a table (340) designed to pick up and transport trays (001) on themselves.

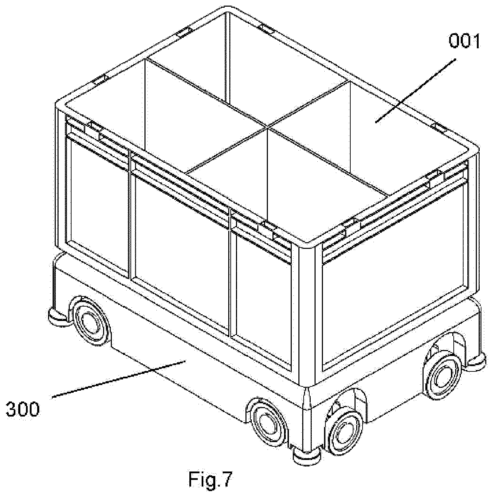

Fig. 7 shows the transport mobile unit (300) in position for moving in the second direction with the tray (001) standing on the table of the unit.

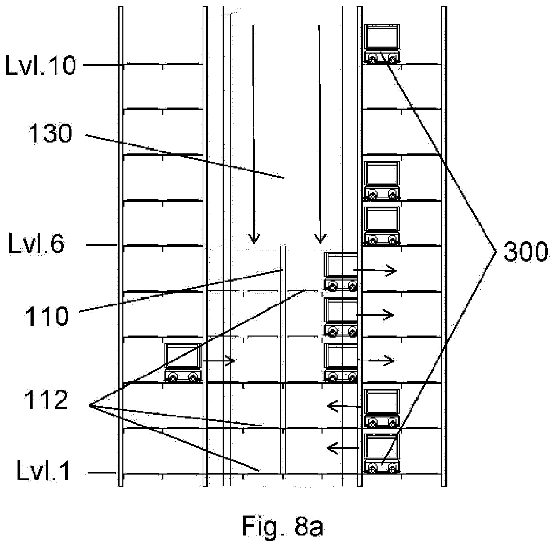

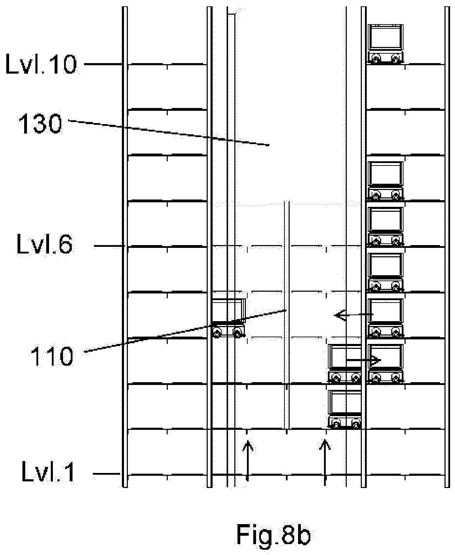

Fig. 8, 9, 10 shows step by step the way of operation of MLP (110) of the lift (100), which purpose in a few vertical discrete movements provides exit to the level where preferably the processing point may be, e.g level 3 of the MTU collected from other levels in necessary sequence and allows arrival of the returning MTU to the necessary level for them.

Thus, Figure 8a shows the MLP (110) of the lift (100) in its lowest position. In this position, the horizontal levels (112) of the MLP (110) coincide with the lower five levels of the transport network (260), levels 1 to 5, allowing the transport mobile units (300), from the lift MLP to move to the adjacent transport network, according to the horizontal level occupied (112) each MTU (300) will move to a similar level of the transport network (260). As can be seen from the figure, on levels 3 to 5 the MLP generally brings in the MTUs from the upper levels of the system, while the lower 2 levels of the MLP serve to lift the MTUs from the lower two levels of the system, arriving at the lift on their own. After a portion of the MTU (300) leaves the MLP (110) of the lift (100) and the other portion of the MTU (300) conversely moves from the transport network (260) to it, the lift MLP will move without intermediate stops to the position shown in Figure 8b.

Figure 8b shows the MLP (110) of the lift (100) in a second vertical position, with its horizontal levels (112) corresponding to levels 2 to 6 of the storage system. In this way, the MTUs (300) at the lower horizontal level (112) of the MLP (110) move to the 2nd level of the transport network (260), from the 2nd level of the MLP to the 3rd level of the transport network... from the 5th level of the MLP to the 6th level of the transport network and so on. This illustration shows how one of the MTUs from the lower levels of the system departs from the MLP to the processing point level (e.g. third from bottom). Similarly, at the same time as leaving MLP (110), other MTUs (300) that need to move between storage levels may also enter from the second side of the MLP.

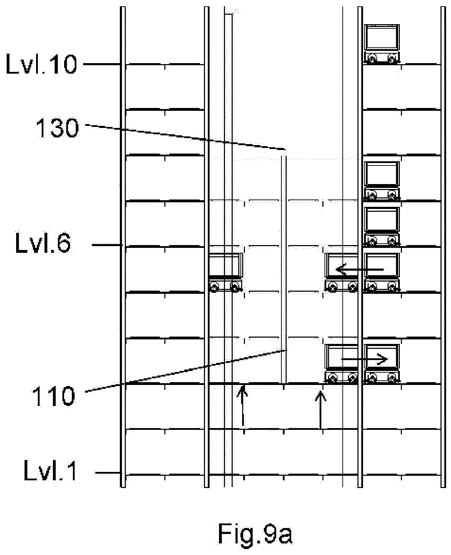

Figure 9a shows a third position of the MLP (110) to which it moves vertically, non-stop from the second position. After this movement, the horizontal levels (112) of the MLP (110) will correspond to levels 3-7 of the transport network (260), where similar movements of the MTU (300) between the MLP and the transport network take place.

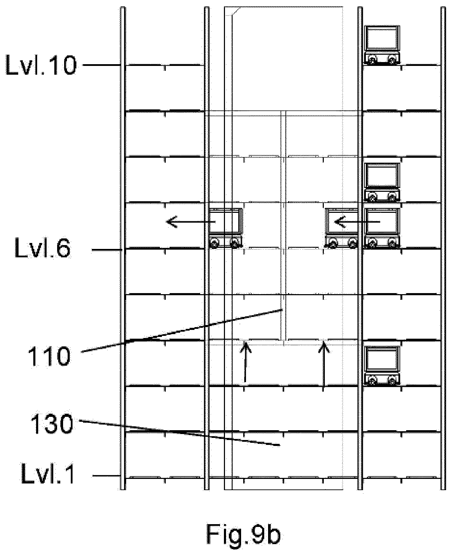

Figure 9b shows a fourth position of the MLP (110), to which it moves vertically, non-stop from the third position. After this movement, the horizontal levels (112) of the MLP (110) will correspond to levels 4-8 of the transport network (260), where similar movements of the MTU (300) between the MLP and the transport network take place.

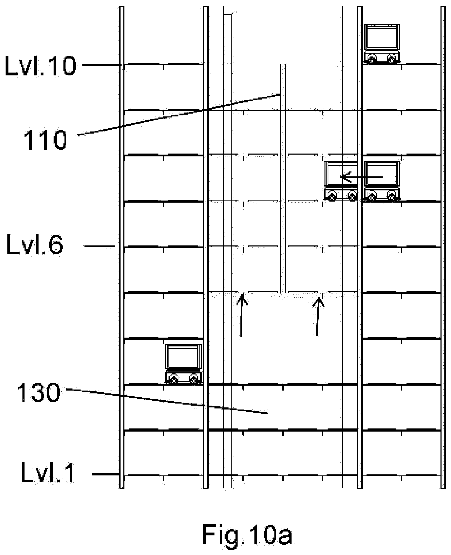

Figure 10a shows a fifth position of the MLP (110), to which it moves vertically, non-stop from the fourth position. After this movement, the horizontal levels (112) of the MLP (110) will correspond to levels 5-9 of the transport network (260), where similar movements of the MTU (300) between the MLP and the transport network take place.

As can be seen from the illustrations, if the lift MLP stops consecutively on each level as it rises up, the MTUs from levels 4,5,6,7 and 8 can drive directly onto level 3 of the MLP, which when the MLP is moved to the lower position will automatically move the MTUs standing on that level to the processing site level, greatly speeding up delivery of trays to it.

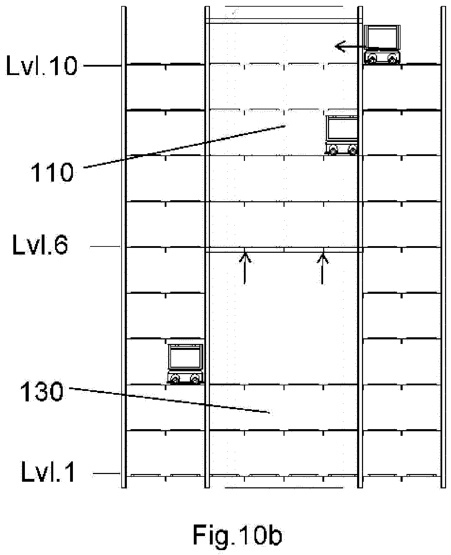

Figure 10b shows the upper position of the MLP (110), a sixth position to which it moves vertically, non-stop from the fifth position. After this movement, the horizontal levels (112) of the MLP (110) will correspond to levels 6-10 of the transport network (260), where similar movements of the MTU (300) between the MLP and the transport network take place. In the figures a variant of the system with a storage area height of 10 levels is proposed. According to the proposed way of working, if a system with a height of 20 or more levels were proposed, the next steps would be similar to this and the previous one, until MLP (110) reaches the top level of the system.

Figure 8a shows the starting and closing position of the MLP (110) in the proposed system, where the MLP (110) is lowered from its up position to the down position in one continuous movement, without stopping at intermediate levels.

Moving directly to the bottom position is due to the fact that the object processing location (290), is preferably located exactly on level 3, and according to the logic of the system most of the tasks for the MTU (300) (in the region of 90%), related to the movement between storage levels, come from the transport of objects between the object processing location (290) and the storage area (200).

Fig. 11, 12, 13 shows a complex variant of transport mobile units (300) movement organisation by levels in the lift operation zone (100). As it can be seen in the figures, for organisation of movement of transport mobile devices (300) in the zone of lift (100) operation, transport networks (250) and (260) should have width of bypass of MLP of lift not less than two steps of regular transport network. It is also clear from the figures that a unidirectional movement of the MTU (300) is preferable when entering and exiting the MLP of the lift. It is also clear from the figures that the described storage and handling system uses three traffic patterns in the lift operating area (100) depending on the level of the storage area and the transport network.

Thus, Figure 11 shows the traffic organisation diagram for traffic levels 1 and 2, thus the levels below the level with the processing point, where the traffic network (260) is present but there is no processing point (290). Thus, it can be seen that the exit of the MTU (300) from MLP (110) is below and the entrance is above it. The direction of travel of the MTU (300) on MLP (110) at these levels of transport networks (250) and (260) is north-south. This organisation of the MTUs (300) at these levels is organised on the basis that these levels are designed to distribute all the MTUs (300) brought in or taken out by the MLP in the correct height and to speed up this process, the distances between the MLP's exit/entry should be kept to a minimum.

Figure 12 shows the traffic organisation at Transport Network Level 3, where the transport network (260) and the treatment site (290) are present, because this is where all the MTUs (300) with troughs (001) are delivered to the treatment sites. The direction of travel of the MTU (300) to the MLP (110) at these transport network levels (250) and (260) is from north to south.

Figure 13 shows the traffic organisation on Level 4 and above, thus the levels above the level with the processing point where only the MLP (110) of the lift (100) operates and there is no transport network (250) covering it. At MLP (110) the unidirectional traffic of the MTU (300) is also organised, but an important difference from the traffic at the lower levels is its 180 degrees turn, which is conditioned to reduce the arrival and departure time of the MTU (300) from MLP (110). It turns out that those MTUs (300) that enter MLP (110) on the upper tiers in the second bottom-up direction in Figure 13, accumulate at the lower edge of MLP (110), and they need to be moved down to make processing of objects in trays on their board, and there this edge of MLP (110) is an exit, which significantly reduces the length of their movement and saves time. The situation is similar with the approach of the MTU (300) on the lower levels to move up the system.

This system is designed to ensure that the trays are moved from the storage area (200) to their processing points (290) in the correct sequence and the processed trays are returned back to the storage area (200).

Figures 14 and 15 show a possible variant of a high-rise object storage and handling system with multiple cascade lifts (1100) configured to operate at least one transport mobile device (300). As can be seen from the figures, the object storage and handling system preferably includes at least one of
- a multi-level storage area (200) with an integrated transport network in which multiple trays (001) with objects are arranged at the storage locations in two horizontal mutually perpendicular directions 1 and 2,
- a plurality of transport mobile units (300) designed to independently pick up and move trays (001) containing objects in two mutually perpendicular horizontal directions 1 and 2 along the transport network both inside and outside the storage area (200),
- several cascade lifts (1100) designed to transport mobile units (300) between levels of storage area (200), connected to storage area (200) by transport networks (250) and (260) via two adaptor rows (280) designed to organize unidirectional movement each,
- several locations for processing objects (290).

The figure also shows several transport mobile units (300) located in different parts of the above system.

Figures 16 and 17 show an enlarged view of a single cascade lift operating area (1100). Figures 16 and 17 show an enlargement of a single cascade lift (1100) with the adjacent part of the storage area (200). The drawings show that each cascade lift (1100) has two-tiered loading platforms (MLPs), a main one (1110) and an additional one (1120). At least one of the loading platforms may correspond to the loading platform 110 of the first embodiment. As can be seen in figure 3 the main MLP (1110) of the cascade lift (1100) can be located as close as possible to the one-way adaptation lanes (280) and is connected to them at all levels by a transport network (260) spread over the entire height of the storage system. An additional MLP (1120) cascading lift (1100) is preferably located further away from the storage area in the first horizontal direction, and may be linked to it by a transport network (250) extending to the lower 5 storage levels only through the adjoining transport network (260) and the adapting lanes (280). As can be seen in Figure 17, the transport network (260) is adjacent to the main MLP (1110) in the second horizontal direction (above and below the MLP in the figure) and the transport network (250) is adjacent to the additional MLP (1120) in both the second (above and below the MLP in the figure) and first (right of the MLP in the figure) horizontal direction, thus covering it in a half ring. The two transport networks (250) and (260) each have two rows, allowing two or more mobile units (300) to pass each other and not only each other. On the right side of the first horizontal direction to the transport network (260), there is an operator station (290) docked on the third level.

Fig. 18 shows a variant of cascade lift design (1100). As can be seen from the figure, the cascade lift (1100) may comprise a vertical post (1130) serving as a device base and a vertical guide for the movement of the MLP, two MLPs, a main MLP (1110) and an additional MLP (1120) moving independently of each other in the vertical direction along the post (1130), which may be cantilevered and arranged on opposite sides of the vertical post (1130) in the first horizontal direction. The main MLP (1110) of the cascade lift is provided for moving the MTU (300) between all levels of the storage system, and comprises a body (1111) and preferably five horizontal levels (1112) attached thereto, made with vertical and horizontal steps coinciding with the intervals of the transport network (260), allowing the MTU (300) to enter and exit all its horizontal levels (1112) in the second horizontal direction. The area of each horizontal level (1112) of the main MLP (1110) allows preferably up to eight or more transport mobile units (300) to be accommodated simultaneously on each level, either empty or with a box on each of them. The dimensions of one horizontal level (1112) in horizontal transport steps may be (n.1*n.2 = 2*4). The vertical operating stroke of the main cascade lift (1100) MLP (1110) allows it to move either one or many MTU (300) at a time, between all storage levels of the system. An additional cascade lift RPM (1120) is provided to move the MTUs (300) between the lower five tiers of the storage system, such that any MTUs (300) located in, or brought into, any of the lower five tiers may be delivered to any one of the tiers by the primary MLP (1110). The additional MLP (1120) of the cascade lift (1100) comprises a body (1121) and three horizontal levels (1122) attached thereto, made with vertical and horizontal steps coinciding with the intervals of the transport network (250), enabling the MTU (300) to enter and exit all its horizontal levels (1122) in the second and first horizontal directions. The area of each horizontal level (1122) of the additional MLP (1120) allows preferably up to eight or more transport mobile units (300) to be accommodated on each level simultaneously, either empty or up to with a tray on each of them. The dimensions of one horizontal level (1122) in horizontal transport steps (n.1*n.2 = 2*4). The vertical working stroke of the main MLP (1120) of the cascade lift (1100) allows it to move both one and many MTUs (300) at a time, between the lower five storage levels of the system.

It is also clear from the presented invention that the cascade lift variant (1100) shown in the figure can also be made with multiple pillars and with non-cantilevered MLPs. In addition, it is understood from the invention that the area of the horizontal MLP levels of the lift and their number can also be different. The MTU as depicted in the first embodiment may also be used for the second embodiment of the invention.

Fig. 19, 20 shows step by step how the main MLP (1110) of the cascade lift (1100) works.

Thus, Figure 19a shows the main MLP (1110) of the cascade lift (1100) in its lowest position. In this position, the horizontal levels (1112), of the main MLP (1110) coincide with the lower five levels of the transport network (260), levels 1 to 5, which allows the transport mobile devices (300), from the lift MLP to move to the adjacent transport network, according to the occupied horizontal level (1112) each MTU (300) will move to a similar level of the transport network (260). After a part of the MTU (300) leaves the main MG of the cascade lift (1110) and another part of the MTU (300) conversely moves from the transport network (260) to it, the main MLP (1100) of the lift may move without intermediate stops to the position depicted in Figure 19b.

Figure 19b shows the main MLP (1110) of the cascade lift (1100) in a second vertical position, with its horizontal levels (1112) corresponding to levels 6 to 10 of the storage system. The MTUs (300) on the lower horizontal level (1112) of the main MLP (1110) are thus moved to the 6th level of the transport network (260), from the second MLP level to the 7th level of the transport network... from the 5th level of the MLP to the 10th level of the transport network and so on. Similarly, at the same time as leaving a MLP level (1110), other MTUs (300) that need to move between storage levels may also arrive on its second/opposite side.

Figure 20a shows a third position of the main MLP (1110) to which it moves vertically, non-stop from the second position. Following this movement, the horizontal levels (1112) of the MLP (1110) will correspond to levels 11-15 of the transport network (260), where similar movements of the MTU (300) between the MLP and the transport network take place. In the figures a variant of the system with a storage hight of 15 levels is proposed. According to the proposed variant of the method, if a system with a height of 20 or more levels was proposed, the next steps would be similar to this and the previous one, until MLP (1110) reaches the top level of the system.

Figure 20b shows the final position of the main MLP (1110) closing its working cycle, a fourth position in the proposed system in which the MLP (1110) descends from its upper position to the lower position in one continuous movement, without stopping at intermediate levels.

The movement immediately to the lower position is due to the fact that the object processing location (290), is located at the bottom preferably exactly on level 3, and according to the logic of the system most of the tasks for the MTU (300) (in the region of 90%), related to the movement between storage levels, come to the transportation of objects between the object processing location (290) and the storage area (200).

Figs. 21 and 22 show, step by step, how the additional MLP (1120) of the cascade lift (1100) works.

Figure 21 shows the additional MLP (1120) of the cascade lift (1100) in the lower position. It can thus be seen that the horizontal levels (1122) of the MLP coincide preferably with the lower three levels of the storage system. The MTUs (300) on the transport network (250) enter the MLP (1120) and vice versa exit the MLP (1120) on the transport network (250) depending on the task to be performed. Entry and exit from the MTUs takes place simultaneously on three levels of the transport network (250). The third level of the transport network (250) is preferably where the object processing point (290) is located, thus placing the heaviest load on the third level/on that level of the system. Therefore, the MLP (1120) has so many horizontal levels (1122) that in each of its positions at least one level of the MLP (1120) coincides with the busiest level of the transport network (250) (in the version shown in the figures with the third level).

In Figure 21b the additional MLP (1120) rises 1 level up, aligning the horizontal levels (1122) of the MLP with the 2-4(x) levels of the transport network (250) depending on its (1120) number of levels, along which the MTUs (300) travel in both directions to and from the MLP.

Figure 22a shows the additional MLP (1120) in its upper position where its horizontal levels (1122) are paired with the 3-5(x) levels of the transport network (250). The working height of the additional MLP (1120) may be limited by the height of the main MLP (1110) of the cascade lift (1100).

Thus, when the main MLP and the additional MLP work together, the additional MLP provides the required distribution preferably over the lower five(x) levels of transport systems (250) and (260) of transport mobile units (300), which in turn move to the main MLP already at the required level for their subsequent operation over the transport networks (250) and (260), while the main MLP (1120) steps the MTUs that are on their horizontal levels (1112) to the required storage system level over its entire height. Thus, the use of a cascade lift (1100) with multi-level MLPs (1110) and (1120), together with the transport networks (250), (260) and adaptor rows (280), provides a higher speed system with 10 or more storage levels than a system with ramp tracks and a storage system equipped with standard freight lifts. However, it may generally also be used with lower level storage facilities.

In Figure 22b the additional MLP (1120) returns one level down, aligning its horizontal levels (1122) with the 2-4(x) levels of the transport network (250). The additional MLP (1120) thus moves up and down, stopping at each successive level. In the above embodiment, the additional MLP (1120) has preferably three horizontal levels (1122), and operates between levels 1 to 5(x) of storage, its entire operating cycle being successive movements of two levels up, starting at the bottom position, and then two levels down, returning the MLP to its original state. During a stop in each position, transport mobile units (300) enter and exit the MLP.

Fig. 23, 24, 25 show a complex variant of transport mobile units (300) movement organisation by levels in the zone of cascade lift (1100) operation. As it can be seen in the drawings, for organization of movement of MTUs (300) in zone of cascade lift (1100) operation, transport networks (250) and (260) should have width of bypass of MLP of lift not less than two steps of regular transport network. It is also clear from the figures that a unidirectional movement of the MTU (300) is preferable when entering and exiting from each MLP of the lift. It is also clear from the figures that the described version of the storage and handling system uses preferably three traffic patterns in the cascade lift operating area (1100) depending on the level of the storage area and the transport network.

Thus, Figure 23 shows the traffic organisation on Levels 1,2,4 and 5(x) of the transport network, where both MLPs of the cascade lift (1100) operate simultaneously. Thus, it can be seen that the exit of the MTU (300) from the additional MLP (1120) and the entrance to the main MLP (1110) are preferably adjacent, as well as the exit from the main MLP (1110) and the entrance to the additional MLP (1120). The direction of traffic of the MTU (300) at the main MLP (1110) and the additional MLP (1120) is preferably divergent at these levels of the transport networks (250) and (260). This organisation of the MTUs (300) on these levels is organised on the basis that these levels are designed to distribute all the MTUs (300) brought in or taken out by the MLP in the correct height and to speed up this process the paths between the MLP exit/entry points should be kept to a minimum.

Fig. 24 shows the traffic organization scheme on the 3rd level, thus the object processing location level, of transport networks, where both MLPs of cascade lift (1100) also operate, but there is an essential difference, because on the 3rd level, the object processing location level, the place of objects processing (290) is connected to the transport networks, because all MTU (300) with trays (001) for objects processing are delivered exactly here. It is clear to the person skilled in the art, that the object processing location level may also be different from level 3, e.g. 1, 2, 4, 5, 6, 7, preferably depending oin the hight of the levels. This is why the cascade lift (1100) with directional removal of the MTUs (300) from both MLPs and their return to the MLPs at the other end of the machining line is routed to the cascade lift (1100). Using this arrangement, the movement of the MTU (300) between MLPs is significantly slower, but because it gives priority to the movement of the MTU (300) from both MLPs of the cascade lift (1100) to the point of processing (290), it is fully justified at this level.

Fig. 25 shows the traffic organisation on levels 6 and above of the transport network, where only one main MLP (1110) of the cascade lift (1100) operates. The main MLP (1110) may be organized to also have a unidirectional movement of the MTU (300), but a preferred difference from the movement on the lower levels is its 180 degrees turn, which is conditioned to reduce the time of arrival and departure of the MTU (300) from the MLP (1110). It turns out that the MTUs (300) entering MLP (1110) on the upper tiers in the second bottom-up direction in Figure 14 are crowded at the lower edge of MLP (1110), and they need to be moved down to the trays on their board, where this edge of MLP (1110) is the exit, which significantly reduces the length of their travel and saves time. The situation is similar with the approach of the MTU (300) on the lower levels to move up the system.

## Claims

1. Storage system (200) comprising
- multiple storage levels with each multiple storage spaces for storage boxes (001)
- multiple mobile transport units (300) for transportation of storage boxes between storage spaces and a storage space and a processing point (290)
∘ the processing point is located on one of the lower storage levels
- in each storage levels a transportation network (250) of tracks is provided on which the mobile transport units are movable within each storage level
- the transportation networks (250) of the individual storage levels are connected by a lift (100/1100)
∘ the lift comprising a platform (110/1110) with several platform levels (112/1112)
∘ the platform levels (112/1112) have the same distance to one another as the levels of the storage space have
∘ the platform (110/1110) is adapted to move vertically between the storage levels
∘ the number of levels (112/1112) of the platform is at least corresponding to the numeral of the storage level where the processing point (290) is located and is at least two on
∘ the platform (110/1110) of the lift (110/1100) reaches in its lowest position the lowest storage level and at least the level on which the processing point (290) is located
∘ the platform (110/1110) is adapted to reach with its top platform level all storage levels that are above platform (110/1110) in its lowest position
∘ the platform is adapted to carry at least two mobile transport units per platform level simultaneously.

2. Storage system according to claim 1
**characterized in that**
the platform is accessible by the mobile transport unis from at least two sides, preferably opposite sides.

3. Storage system according to claim 1 or 2,
**characterized in that**
the lift (1100) comprises a second platform (1120) with several platform levels (1122), the platform levels (1122) have the same distance to one another as the levels of the storage space have.

4. Storage system according to claim 3
**characterized in that**
the number of levels (1122) of the second platform (1120) is at least corresponding to the numeral of the storage level the processing point (290) is located on.

5. Storage system according to claim 3 or 4
**Characterized in that**
the number of levels (112/1112) of the first platform (110/1110) is higher than the number of levels (1122) of the second platform (1120).

6. Storage system according to any of claims 3 to 5
**characterized in that**
the second platform (1120) is adapted to move vertically between the storage levels.

7. Storage system according to any of claims 3-6
**characterized in that**
the second platform (1120) is accessible by the mobile transport unis from at least two sides, preferably three sides.

8. Storage system according to any preceding claim
**characterized in that**
the platforms (110/1110/1120) and the storage spaces are connected via two lane tracks

9. Method of transportation of multiple mobile transport units (300) within the storage system according to any of claims 1 to 8
**characterized in that**
the levels of the first platform are aligned with levels of the storage system
- mobile transport units (300) enter the first platform (110/1110) from on side and/or exit the first platform from (110/1100) to an opposite side from multiple levels of the storage system at the same time
- the platform moves at least one level of the storage system up or down
- at least some of the mobile transport units (300) that have entered the platform before leave the platform, if the destination storage system level is reached
- mobile transport units that stay on the platform move towards the exit side of the platform in order to make space for further entering mobile transport units (300) entering the platform on the new storage level.

10. Method according to claim 9
**characterized in that**
The second platform (1120) is operated in the same way as the first platform but only in the lower part of the storage levels such that at least one level of the second platform (1120) aligns with the storage level on which the processing point (290) is located thereby taking over the extra load the lower levels experience due to their neighbourhood to the processing point (290).

11. Method according to claim 10
**Characterized in that** the mobile transport units are moved unidirectional at least in proximity to the lift, thus when entering, exiting and/or moving around the lift, preferably moving unidirectionally in the whole storage system.
